# EUROPÄISCHE PATENTSCHRIFT

(11) **EP 0 610 171 B1**
(45) Veröffentlichungstag und Bekanntmachung des Hinweises auf die Patenterteilung: **27.08.1997**
(21) Anmeldenummer: 94890029.5
(22) Anmeldetag: 02.02.1994
(51) Int. Cl.: A01K 5/02

(54) **Fütterungsanlage für Schweine**
Feeder apparatus for pigs
Mangeoire pour les porcs

(30) Priorität: 02.02.1993 AT 172/93
(43) Veröffentlichungstag der Anmeldung: 10.08.1994
(73) Patentinhaber: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Helmut, Dipl.-Ing.

(56) Entgegenhaltungen:
- EP-A- 0 296 256
- AT-B- 383 723
- DE-C- 3 701 864
- DE-U- 8 701 351
- DE-U- 9 209 391
- US-A- 3 473 515
- US-A- 3 792 686

## Beschreibung

Die Erfindung betrifft eine Fütterungsanlage für Schweine, mit einem jeweils ein einziges Tier aufnehmenden Durchlaufkäfig mit sperrbarer Einlaßtür und vom Käfiginneren her betätigbarer Auslaßtür, einer einem Futtertrog zugeordneten Futterausgabevorrichtung und einer elektronischen Steuereinrichtung, die über eine Identifizierungsvorrichtung die Tiere nach von ihnen getragenen Identifizierungsmarken identifiziert und die Futterausgabevorrichtung steuert, so daß nur berechtigte Tiere, insbesondere solche, die beim jeweiligen Fütterungszyklus noch kein Futter erhalten haben ihre Futterration bei gesperrt bleibender Eingangstür erhalten, bei nichtberechtigten Tieren aber die Sperre der Eingangstür aufgehoben wird und keine Futterausgabe erfolgt.

Eine derartige Fütterungsanlage ist aus der AT-PS 383 723 bekannt. Hier besitzt der Durchlaufkäfig in der Draufsicht die Grundform eines Y, von dem der eine Schenkel die Fütterungsstation aufnimmt und am anderen Schenkel die Auslaßtür vorgesehen ist, so daß sich für das Tier an dem Schenkel ein gegenüber dem langgestreckten Einlaßbereich schräger Auslauf ergibt. Aus der EP-A-0 296 256 ist eine Fütterungsanlage bekannt, bei der ein langgestreckter Fütterungskäfig gegenüber dem Einlaß eine Fütterungsstation enthält und in einer Seitenwand des Käfigs die Auslaßtür angeordnet ist. Nachteilig ist hier, daß beim Ende des Fütterungsvorganges und Freigabe der Einlaßtür das im Käfig befindliche, abgefütterte Tier vom nachdrängenden Tier gegen den Fütterungstrog gedrückt werden kann und dann nicht mehr in der Lage ist, zurückzutreten, um den seitlichen Auslaß zu erreichen. Es kann hier zu Panik oder zu Verletzungen der Tiere kommen.

Aus der US-PS 3 473 515 ist eine Fütterungsanlage mit geradlinigem Durchlaufweg zwischen Ein- und Auslaßtür bekannt, wobei im Käfig vor der Auslaßtür der Fütterungstrog seitlich angeordnet ist. Dieser Trog ist ortsfest und behindert den Durchgang, so daß es notwendig wird, die Durchgangsbreite des Käfigs neben dem Trog hinreichend groß zu bemessen, um dem Tier das Verlassen des Fütterungskäfigs zu ermöglichen. Damit ergibt sich auch insgesamt eine relativ große Käfigbreite, weshalb es in der Praxis möglich ist, daß zwei Tiere nebeneinander die Station betreten. Dies muß verhindert werden, um zu vermeiden, daß es bei rationierter Fütterung zu Rangkämpfen in der Station kommt.

Nach der DE-PS 37 01 864 ist eine Fütterungsanlage mit einer Sortier-und Überwachungseinrichtung für eine Tiergruppe kombiniert. Dabei sind mehrere Freßstände in einer Reihe angeordnet und ein über einen Einlaß erreichbarer Fütterungskäfig kann über eine Transporteinrichtung von Freßstand zu Freßstand verfahren werden. In einer Mittellage ist der Einlaß des Fütterungskäfigs offen. Sobald ein Tier den Käfig betreten hat, schließt die Eingangstür, das Tier wird identifiziert und gewogen und dann mit dem Käfig zu einem Freßstand verfahren, wo ihm, falls es berechtigt ist, die entsprechende Futterportion verabreicht wird. Anschließend fährt der Käfig in die mittlere Ausgangslage zurück und es wird ein Auslaß geöffnet, der geradlinig dem Einlaß gegenüberliegt, aber als Schwenkklappe ausgeführt ist, die je nach Lage den Auslauf in einen oder einen anderen Warteraum ermöglicht. Nach einer zweiten Möglichkeit sind neben den Freßständen Freiplätze vorgesehen, die einen Auslauf ermöglichen, wenn der Fütterungskäfig bis zu ihnen verfahren wird, wobei das Tier nach Verlassen des Fütterungskäfigs in einen Warteraum gelangt und von dem über eine sperrbare Auslaßtür in den Aufenthaltsraum zurückkehren kann. Die Konstruktion ist wegen der Notwendigkeit der Transporteinrichtung und der Anordnung mehrerer Freßstände äußerst aufwendig, wobei auch hier jeweils nur ein Einzeltier gefüttert werden kann.

Aus der US-PS 3 792 686 ist ein Melkstand für Kühe bekannt, der ebenfalls bei relativ großer Durchgangsbreite einen geraden Durchlauf zwischen über Fernsteuerungen und Antriebseinrichtungen betätigbaren Ein- und Ausgangstüren ermöglicht. Um das Tier während des Melkvorganges ruhig zu halten, ist an dem einen Flügel der zweiflügeligen Ausgangstür ein Futternapf befestigt, der über eine Beschickungseinrichtung Futter erhält und beim Öffnen der Ausgangstür mit dieser ausgeschwenkt wird, so daß das Tier keinen Zugriff zum Futter mehr hat. Bei Fütterungsanlagen für Schweine ist eine entsprechende Anordnung nicht bekannt und wäre auch unbrauchbar, da die außerhalb des Fütterungskäfigs befindlichen Tiere den ausgeschwenkten Futternapf, der hier freisteht, belagern würden.

Um bei Schweinefütterungsanlagen zu verhindern, daß nicht berechtigte Tiere im Futtertrog befindliche Futterreste aufnehmen und aus diesem Grund länger im Fütterungskäfig verweilen, ist es bekannt. für den Futtertrog den Zugang verhindernde Absperrungen z. B. Schwenkklappen vorzusehen.

Aufgabe der Erfindung ist es, eine Fütterungsanlage der eingangs genannten Art zu schaffen, die bei vereinfachtem Aufbau einen problemlosen Fütterungsablauf gewährleistet und das Lernverhalten der Tiere anregt, so daß sich die Tiere rasch daran gewöhnen den Durchlaufkäfig nur einzeln zu betreten und dann, wenn sie nicht berechtigt sind, den Käfig auch rasch wieder freigeben.

Die gestellte Aufgabe wird dadurch gelöst, daß der einen geradlinigen Durchgangsweg zwischen Ein- und Auslaßtür bestimmende Fütterungskäfig eine nur ein Tier durchlassende Durchgangsbreite besitzt und für den Futtertrog oder eine Futtertrogabdeckung eine gesonderte. von der elektronischen Steuereinrichtung gesteuerte Antriebseinrichtung vorgesehen ist, die den Futtertrog bzw. dessen Abdeckung in einer den Durchlaufweg freigebenden, den Zugang zum Troginhalt aber sperrenden Ruhestellung hält und nur für ein über die Identifizierungseinrichtung erkanntes, berechtigtes, im Käfig befindliches Einzeltier bei gesperrter Eingangstür in eine im Abstand von der Auslaßtür den weiteren Durchgang behindernde, aber den Zugang zum Troginhalt zulassende Freßlage einstellt.

Um zu verhindern, daß ein z. B. auf ein anderes Tier aufreitendes Tier als zweites Tier den Fütterungskäfig betritt, kann man auch die Durchgangshöhe der von der Einlaßtür abschließbaren Eingangsöffnung begrenzen. Meist genügt es aber, wenn die Tiere erkennen, daß grundsätzlich keine Futterausgabe erfolgt, solange sich mehr als ein Tier im Käfig befindet. Ein nichtberechtigtes Tier hat freien, geradlinigen Durchlauf durch den Käfig und hat, weil es keine Futterreste erreichen kann, auch keine Veranlassung im Käfig zu verweilen. Anderseits kann für die Fütterung ein genügend großer Futtertrog Verwendung finden, aus dem die Tiere in normaler Freßhaltung und ohne die bisher sonst häufig notwendigen Verrenkungen das Futter entnehmen können. Durch Zeitsteuerungen, bei denen nach Ablauf einer vorgegebenen Freßzeit der Futtertrog ausgefahren oder abgedeckt wird, kann man erreichen, daß die Tiere das Futter in einer angemessenen Zeit aufnehmen, wobei auch hier das Lernverhalten der Tiere zur Wirkung kommt.

In der Praxis können die Einzelelemente der erfindungsgemäßen Grundkonstruktion auf verschiedene Weise verwirklicht werden. Nach einer bevorzugten Ausführungsform ist der Futtertrog quer zum Durchlaufweg wenigstens über einen Großteil der Durchgangsbreite angeordnet und über die Abdeckung zu einer übersteigbaren Bodenschwelle verschließbar. Dabei ist es auch möglich, daß der Futtertrog aus einer in den Käfigboden versenkten abgedeckten Ruhestellung bei geöffneter Abdeckung nach oben in eine erhöhte Fütterungsstellung ausfahrbar ist.

Nach einer anderen Variante ist der Futtertrog über die Antriebseinrichtung seitlich aus dem Durchlaufweg des Durchlaufkäfigs ausfahrbar oder -schwenkbar angebracht. In beiden Fällen befindet sich der Futtertrog in der Fütterungsstellung im ausreichenden Abstand von der Auslaßtür, um zu verhindern, daß außerhalb des Käfigs befindliche Tiere durch diese Auslaßtür hindurch das fressende Tier belästigen.

Konstruktiv läßt sich die zuletzt genannte Ausführungsform einfach dadurch verwirklichen, daß ein runder Futtertrog um eine in der Nähe seines Randes und im Bereich der einen Käfigseitenwand vorgesehene Achse in den und aus dem Durchlaufweg schwenkbar angebracht ist, wobei die beiden Schwenkendstellungen so gewählt sein können, daß der Auslaß einer Futterausgabevorrichtung immer in den Trog zielt. Eine Variante bestünde hier darin, für die Ausgabevorrichtung ein bewegliches Auslaßrohr oder einen Auslaßschlauch zu verwenden und mit dem Trog zu verbinden.

Die Ausführung nach Anspruch 6 ermöglicht es, Gewichtskontrollen der Tiere während der Fütterung vorzunehmen bzw. durch Gesamtwägungen die vom Einzeltier aufgenommene Futtermenge zusätzlich zu kontrollieren.

Weitere Einzelheiten und Vorteile des Erfindungsgegenstandes entnimmt man der nachfolgenden Zeichnungsbeschreibung.

In der Zeichung ist der Erfindungsgegenstand beispielsweise veranschaulicht. Es zeigen jeweils in stark schematisierter vereinfachter Darstellungsweise
- Fig. 1: eine erfindungsgemäße Fütterungsanlage bei abgenommener vorderer Seitenwand des Durchlaufkäfigs in Ansicht,
- Fig. 2: die Fütterungsanlage nach Fig. 1 in Draufsicht,
- Fig. 3: als Detail eine schematische Darstellung des Futtertroges und seiner Abdeckung,
- Fig. 4: in der Fig. 1 entsprechender Darstellungsweise wieder eine Fütterungsanlage in Seitenansicht und
- Fig. 5: eine Draufsicht zu Fig. 4.

In der Zeichnung wurden nur jeweils die für die Erfindung wesentlichen Teile dargestellt. Es ist ein Durchlaufkäfig 1 vorhanden, der durch Seitenwände 2, 3 begrenzt ist, wobei der Käfig am einen Ende durch eine Einlaßtür 4 und am anderen Ende durch eine Auslaßtür 5 verschlossen ist. Die Türen 4, 5 können ein- oder zweiflügelig, aber auch als Hubtüren bzw. um im wesentliche horizontale Achsen schwenkende Klapptüren ausgeführt sein. Die Auslaßtür 5 kann eine nur vom Käfiginneren her zu öffnende Tür sein, gegebenenfalls kann aber auch für die Auslaßtür ein zusätzlicher Antrieb und/oder eine Sperrvorrichtung vorgesehen werden. Für die Einlaßtür 4 kann eine pneumatische Antriebseinheit oder ein sonstiger Schließantrieb vorgesehen werden. Es sind auch einfache Selbstschließer möglich wobei die Tür über von dem im Käfig befindlichen Tier betätigte Sperren geschlossen gehalten wird.

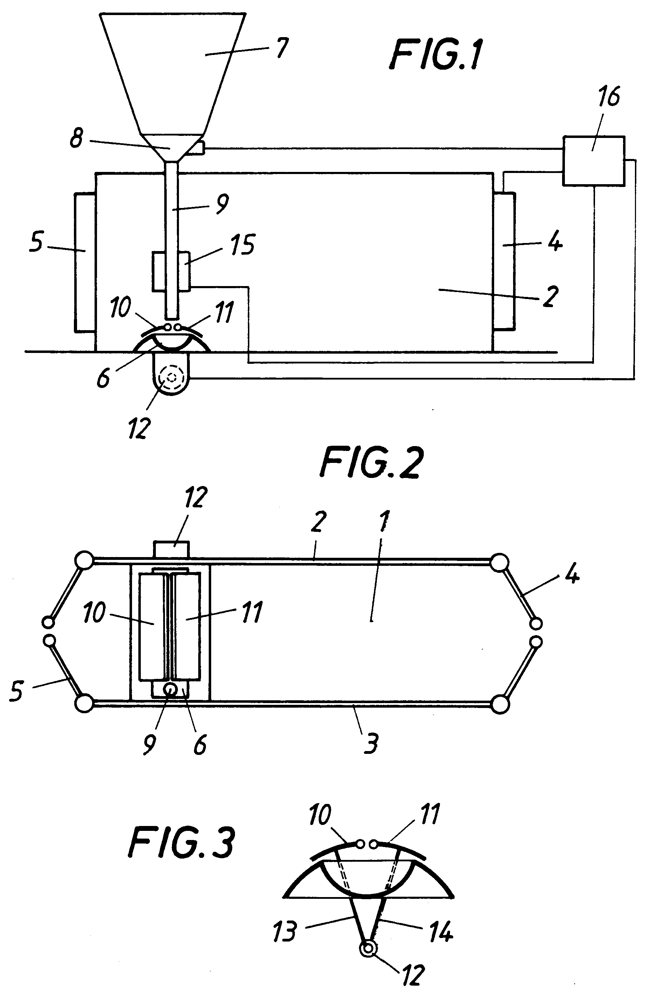

Nach den Fig. 1 bis 3 ist im Abstand von der Auslaßtür 5 ein Futtertrog 6 quer im wesentlichen über die Breite des Durchlaufkäfigs 1 reichend angebracht. Dieser Futtertrog ist von einem Futtervorrat 7 über eine Dosiereinrichtung 8 und ein Fallrohr 9 mit Futter beschickbar. Ferner ist für den Futtertrog eine beim Ausführungsbeispiel aus zwei Klappen 10, 11 bestehende Abdeckung mit zugeordneter Antriebseinrichtung 12 vorhanden, die die Klappen 10, 11 über Schwenkhebel 13, 14 (siehe Fig. 3) betätigt. An Stelle der Klappen 10, 11 kann auch ein Schiebeboden, eine Einzelklappe oder eine sonstige Abdeckung vorgesehen werden. Innerhalb des Stalles und in der Nähe des Futtertroges 6, aber gegenüber diesem erhöht, ist wenigstens ein Fühler 15 einer Identifizierungseinrichtung vorgesehen, der auf von den Tieren an Halsbändern, Ohrmarken oder in Form von Implantaten getragenen Identifizierungsmarken anspricht und mit einer elektronischen Steuereinheit 16 (nur in Fig. 1 angedeutet) verbunden ist. Weitere entsprechende Fühler 15 können auch im Ein- und Ausgangsbereich vorgesehen werden. Die elektronische Steuereinrichtung erkennt aus den übermittelten Identifizierungsmerkmalen ein jeweils im Durchlaufkäfig 1 befindliches Tier. Für die Eingangstüren 4 kann ein z. B. pneumatischer Schließantrieb vorgesehen werden, der nach einer Ausführungsform über Fühler durch Öffnungsbetätigung der Tür 4 einschaltbar ist und die Tür 4 zunächst für eine kurze Zeitspanne, z. B. 10 oder 20 Sekunden, schließt. Hat während dieser Zeit die elektronische Steuereinrichtung 16 aus den übermittelten Identifizierungsdaten festgestellt, daß das momentan im Durchlaufkäfig 1 befindliche Tier nicht zum Futterempfang berechtigt ist, dann öffnet die Eingangstür 4 und das im Käfig 1 befindliche Tier kann von einem nachdrängenden Tier verdrängt werden, so daß es den Durchlaufkäfig 1 durch die Ausgangstür 5 verläßt. Ist das Tier zum Futterempfang berechtigt, dann hält die elektronische Steuereinrichtung die Eingangstür 4 für eine vorbestimmte Fütterungszeitspanne geschlossen. Nach einer Variante wird der Schließantrieb der Tür 4 nach Identifizierung eines berechtigten Tieres unmittelbar von der Steuereinheit 16 gesteuert. Vor der Futterausgabe ist der Trog 6 durch die Abdeckungen 10, 11 zu einer leicht übersteigbaren Bodenschwelle geschlossen. Befindet sich ein berechtigtes Tier allein im Durchlaufkäfig 1, dann steuert die elektronische Steuereinheit den Öffnungsantrieb 12 der Abdeckklappen 10, 11, so daß diese den Trog 6 freigeben. Über die Dosiereinrichtung 8 erhält das Tier nun gegebenenfalls in mehreren aufeinanderfolgenden Einzelportionen die ihm aufgrund der Identifizierung zustehende und über die elektronische Steuereinheit festgelegte Futterration. Nach Abgabe der oder der letzten Futterportion gibt die elektronische Steuereinheit den Schließbefehl für die Klappen 10, 11 und gleichzeitig einen Öff- nungs- oder Entriegelungsbefehl für die Eingangstür 4, so daß das nun gefütterte Tier den Käfig 1 durch die Tür 5 verlassen kann bzw. aus dem Käfig 1 durch ein nun über die Tür 4 nachdrängendes Tier verdrängt wird. Befindet sich mehr als ein Tier im Durchlaufkäfig 1, so wird dies durch eine Wiegeeinrichtung im Boden des Käfigs 1 oder durch den bzw. die auf die Identifizierungsmarken empfindlichen Fühler 15, gegebenenfalls aber auch durch Fühler der durch ein nachdrängendes Tier blockierten, also offenbleibenden Eingangstür 4 erkannt, die Schließverstellung der Tür 4 unterbleibt ebenso wie die Futterausgabe, so daß die Tiere erkennen, daß nur berechtigte Einzeltiere tatsächlich Futter erhalten können.

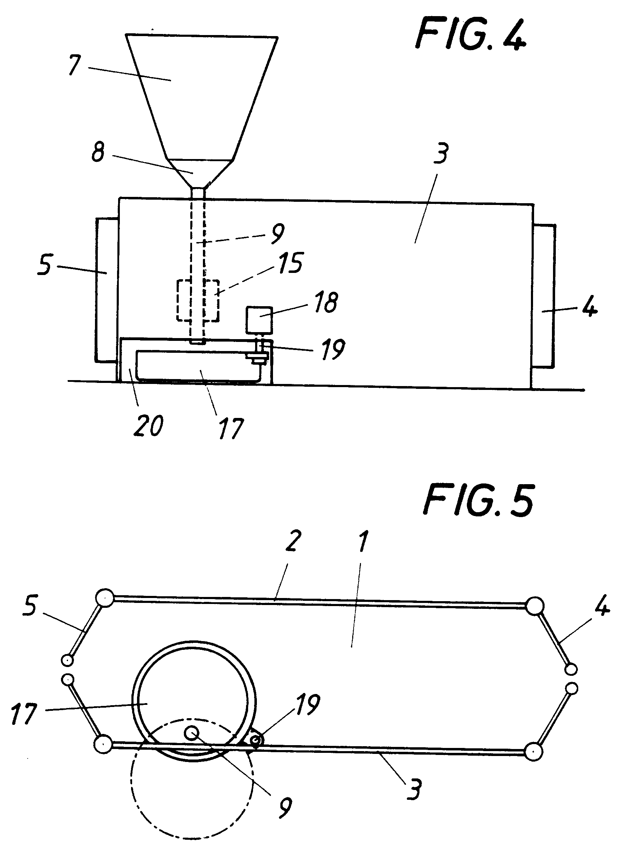

Die Ausführungsform nach den Fig. 4 und 5 entspricht in den übrigen Details der Konstruktion nach den Fig. 1 und 2, weshalb auch gleiche Teile mit gleichen Bezugszeichen gekennzeichnet wurden. Statt dem langgestreckten Futtertrog 6 nach den Fig. 1 und 2 ist ein runder Futtertrog 17 vorhanden, der mittels eines Schwenkantriebes 18 um eine stehende Achse 19, die sich in Randnähe des Troges 17 befindet, aus der in den Fig. 4 und 5 voll eingezeichneten Fütterungsstellung durch eine seitliche Öffnung 20 der Wand 3 ausgeschwenkt werden kann, wobei in der ausgeschwenkten Ruhestellung der Durchlauf durch den Käfig 1 frei ist, aber ein Zugang zum Trog 17 verhindert wird. Selbstverständlich sind außerhalb der Wand 3 Gehäuseteile vorhanden, die den Trog 17 abschließen und den Zugang zu ihm für außerhalb des Käfigs 1 befindliche Tiere verhindern. Im übrigen entspricht der Funktionsablauf der Fütterungsanlage nach den Fig. 1 bis 3.

## Patentansprüche

1. Fütterungsanlage für Schweine, mit einem jeweils ein einziges Tier aufnehmenden Durchlaufkäfig mit sperrbarer Einlaßtür und vom Käfiginneren her betätigbarer Auslaßtür, einer einem Futtertrog zugeordneten Futterausgabevorrichtung und einer elektronischen Steuereinrichtung, die über eine Identifizierungsvorrichtung die Tier nach von ihnen getragenen Identifizierungsmarken identifiziert und die Futterausgabevorrichtung steuert, so daß nur berechtigte Tiere, insbesondere solche, die beim jeweiligen Fütterungszyklus noch kein Futter erhalten haben ihre Futterration bei gesperrt bleibender Eingangstür erhalten, bei nichtberechtigten Tieren aber die Sperre der Eingangstür aufgehoben wird und keine Futterausgabe erfolgt, dadurch gekennzeichnet, daß der einen geradlinigen Durchgangsweg zwischen Ein- und Auslaßtür bestimmende Fütterungskäfig (1) eine nur ein Tier durchlassende Durchgangsbreite besitzt und für den Futtertrog (6, 17) oder eine Futtertrogabdeckung (10, 11) eine gesonderte, von der elektronischen Steuereinrichtung (16) gesteuerte Antriebseinrichtung (12, 18) vorgesehen ist, die den Futtertrog bzw. dessen Abdeckung in einer den Durchlaufweg freigebenden, den Zugang zum Troginhalt aber sperrenden Ruhestellung hält und nur für ein über die Identifizierungseinrichtung (15) erkanntes, berechtigtes, im Käfig befindliches Einzeltier bei verschlossener und gesperrter Eingangstür (4) in eine im Abstand von der Auslaßtür den weiteren Durchgang behindernde, aber den Zugang zum Troginhalt zulassende Freßlage einstellt.

2. Fütterungsanlage nach Anspruch 1, dadurch gekennzeichnet, daß der Futtertrog (6) quer zum Durchlaufweg wenigstens über einen Großteil der Durchgangsbreite angeordnet und über die Abdeckung (10, 11) zu einer übersteigbaren Bodenschwelle verschließbar ist.

3. Fütterungsanlage nach Anspruch 1 oder 2, dadurch gekennzeichnet, daß der Futtertrog (6) aus einer in den Käfigboden versenkten abgedeckten Ruhestellung bei geöffneter Abdeckung (10, 11) nach oben in eine erhöhte Fütterungsstellung ausfahrbar ist.

4. Fütterungsanlage nach Anspruch 1, dadurch gekennzeichnet, daß der Futtertrog (17) über die Antriebseinrichtung (18) seitlich aus dem Durchlaufweg (1) des Durchlaufkäfigs ausfahrbar oder -schwenkbar angebracht ist.

5. Fütterungsanlage nach Anspruch 4, dadurch gekennzeichnet, daß ein runder Futtertrog (17) um eine in der Nähe seines Randes und im Bereich der einen Käfigseitenwand (3) vorgesehene Achse (19) in den und aus dem Durchlaufweg schwenkbar angebracht ist.

6. Fütterungsanlage nach einem der Ansprüche 1 bis 5, dadurch gekennzeichnet, daß der Fütterungskäfig (1) mit einer Wiegeeinrichtung für ein Tier versehen bzw. in seiner Gesamtheit auf einer Wiegeeinrichtung abgestützt ist.

## Claims

1. A feeding installation for pigs, comprising a walk-through cage accommodating one animal at a time and having a lockable entry door and an exit door adapted to be operated from the interior of the cage, a feed dispensing device associated with a feeding trough, and an electronic control device which, by way of an identification device, identifies the animal from identification marks carried by the animal, and controls the feed dispensing device so that only authorised animals, more particularly those which have not yet received feed during the relevant feeding cycle, receive their feed ration with the entry door remaining locked, while the entry door lock is released in the case of unauthorised animals and no feed is dispensed, characterised in that the feed cage (1), which defines a rectilinear passageway between the entry door and the exit door has a width such as to allow the passage of only one animal and a separate drive means (12, 18) controlled by the electronic control device (16) is provided for the feeding trough (6, 7) or a feeding trough cover (10, 11) and holds the feeding trough or its cover in a position of rest in which it releases the passageway but blocks the access to the trough contents and only for an authorised individual animal in the cage as recognised by the identification device (15), with the entry door (4) closed and locked, does it set a feeding position which while it prevents further passage at a distance from the exit door does allow access to the trough contents.

2. A feeding installation according to claim 1, characterised in that the feeding trough (6) is disposed transversely of the passageway at least over the majority of the passage width and is closable by means of the cover (10, 11) to form a crossable floor sill.

3. A feeding installation according to claim 1 or 2, characterised in that the feeding trough (6) is extensible upwardly into a raised feeding position with the cover (10, 11) open, from a covered position of rest in which it is countersunk in the cage floor.

4. A feeding installation according to claim 1, characterised in that the feeding trough (17) is extensible or pivotable laterally out of the passageway (1) of the walk-through cage by means of the drive device (18).

5. A feeding installation according to claim 4, characterised in that a round feeding trough (17) is disposed to be pivotable into and out of the passageway about a pivot (19) provided near its edge and in the region of one side wall (3) of the cage.

6. A feeding installation according to any one of claims 1 to 5, characterised in that the feeding cage (1) is provided with a weighing device for an animal or is supported as a unit on a weighing device.

## Revendications

1. Installation d'affouragement pour des porcs, avec une cage de passage, recevant chaque fois un seul animal, avec une porte d'admission pouvant être obturée et une porte d'évacuation pouvant être actionnée depuis l'intérieur de la cage, avec un dispositif d'alimentation en fourrage, associé à une mangeoire, et un dispositif de commande électronique, qui identifie, par l'intermédiaire d'un dispositif d'identification, les animaux suivant des marques d'identification portées par eux et qui commande le dispositif d'alimentation en affouragement, de manière que seuls des animaux autorisés, en particulier ceux qui n'ont encore reçu aucun fourrage lors du cycle d'affouragement respectif, reçoivent leur ration d'affouragement, la porte d'entrée restant fermée pendant ce temps, le blocage de la porte d'entrée étant cependant cessé lorsqu'il s'agit d'animaux non-autorisés pour l'affouragement et aucune distribution d'affouragement n'étant effectuée, caractérisée en ce que la cage d'affouragement (1), déterminant un chemin de passage en ligne droite entre la porte d'admission et la porte d'évacuation, est d'une largeur de passage n'admettant qu'un seul animal, et un dispositif d'entraînement (12, 18) séparé, commandé par le dispositif de commande électronique (16), étant prévu pour la mangeoire (6, 17) ou bien pour un recouvrement de mangeoire (10, 11), dispositif d'entraînement (12, 18) maintenant la mangeoire ou son recouvrement dans une position de repos, qui laisse libre le chemin de passage, mais qui cependant barre l'accès au contenu de la mangeoire, et règle une position d'affouragement, l'affouragement étant effectué à distance de la porte d'évacuation, en entravant la continuation du cheminement de passage, mais en admettant cependant l'accès au contenu de la mangeoire, ceci pour un seul animal individuel, se trouvant dans la cage et ayant été identifié comme autorisé à recevoir l'affouragement par l'intermédiaire du dispositif d'identification (15), l'affouragement étant effectué lorsque la porte d'entrée (4) est fermée et bloquée.

2. Installation d'affouragement selon la revendication 1, caractérisée en ce que la mangeoire (6) est disposée transversalement par rapport au chemin de passage, en faisant au moins une grande partie de la largeur de passage, et est susceptible d'être fermée par l'intermédiaire du recouvrement (10, 11) pour constituer au niveau du sol un seuil, devant être franchi.

3. Installation d'affouragement selon la revendication 1 ou la revendication 2, caractérisée en ce que la mangeoire (6) est susceptible d'être déployée, d'une position de repos dans laquelle elle est recouverte, escamotée dans le fond de la cage, par une ouverture du recouvrement (10, 11), fait par un déplacement vers le haut, pour prendre une position d'affouragement, se trouvant à un niveau supérieur.

4. Installation d'affouragement selon la revendication 1, caractérisée en ce que la mangeoire (17) est montée, de façon à être susceptible d'être écartée latéralement, par déplacement ou pivotement, par l'intermédiaire du dispositif d'entraînement (18), afin de sortir du chemin de passage (1) de la cage de passage.

5. Installation d'affouragement selon la revendication 4, caractérisée en ce qu'une mangeoire (17) ronde est montée, de façon à pouvoir pivoter, en évoluant autour d'un axe (19) prévu à proximité de son bord et dans la zone d'une paroi latérale (3) de la cage, pour pénétrer dans et pour sortir du chemin de passage.

6. Installation d'affouragement selon l'une des revendications 1 à 5, caractérisée en ce que la cage d'affouragement (1) est pourvue d'un dispositif de pesée pour un animal, respectivement est soutenue dans sa globalité sur un dispositif de pesée.
